# EUROPÄISCHE PATENTANMELDUNG

(11) **EP 4 059 597 A1**
(43) Veröffentlichungstag der Anmeldung: **21.09.2022**
(21) Anmeldenummer: 21162713.8
(22) Anmeldetag: 16.03.2021
(51) Int. Cl.: B01J 8/44

(54) **FLIESSBETT- ODER WIRBELSCHICHTREAKTOR ZUR BEHANDLUNG VON OXIDISCHEM FEINERZ, INSBESONDERE EISENERZ, UND VERFAHREN ZUR HERSTELLUNG SOLCH EINES FLIESSBETTREAKTORS**

(71) Anmelder: Primetals Technologies Austria GmbH, 4031 Linz (AT)
(72) Erfinder: Hiebl, Bernhard, 4073 Wilhering (AT); Rein, Norbert, 1060 Wien (AT); Wolfinger, Thomas, 4030 Linz (AT); Wurm, Johann, 4283 Bad Zell (AT)
(74) Vertreter: Metals@Linz

(57) **Zusammenfassung**

Die Erfindung betrifft einen Fließbettreaktor (10) und ein Verfahren zur Herstellung des Fließbettreaktors (10), wobei der Fließbettreaktor (10) einen Verteilerboden (20), einen Verteilerraum (25) und einen Reaktor (15) mit einem Reaktorraum (30) aufweist, wobei der Verteilerboden (20) eine erste Verteilerplatte (85) und eine auf der ersten Verteilerplatte (85) angeordnete zweite Verteilerplatte (90) aufweist, wobei die erste Verteilerplatte (85) eine erste Anordnung (95) ersten Durchgangsöffnungen (100) aufweist, wobei die zweite Verteilerplatte (90) einen plattenförmig ausgebildeten Anlageabschnitt (130) und eine zweite Anordnung (120) aus Abdeckabschnitten (125) aufweist, wobei der Anlageabschnitt (130) beabstandet zu der ersten Anordnung (95) der ersten Durchgangsöffnungen (100) an der ersten Verteilerplatte (85) anliegt, wobei jeweils ein Abdeckabschnitt (125) der zweiten Anordnung (120) beanstandet in der ersten Richtung (z) zu einer zugeordneten ersten Durchgangsöffnung (100) angeordnet ist, wobei die zweite Verteilerplatte (90) an jedem der Abdeckabschnitte (125) eine zweite Durchgangsöffnung (170) aufweist, wobei aus dem Verteilerraum (25) ein Reaktionsgas (60) zur Behandlung des Feinerzes (55) in den Reaktorraum (30) einleitbar ist.

## Beschreibung

Die Erfindung betrifft einen Fließbettreaktor gemäß Patentanspruch 1 und ein Verfahren zur Herstellung des Fließbettreaktors gemäß Patentanspruch 15.

Aus WO 2020/1876272 A1 ist ein Verfahren zur Direktreduktion von oxidischen Eisenträgerpartikeln zu einem Reduktionsprodukt in einem Fließbettreaktor bekannt.

Es ist Aufgabe der Erfindung, einen verbesserten Fließbettreaktor und ein verbessertes Verfahren zur Herstellung des Fließbettreaktors bereitzustellen.

Diese Aufgabe wird mittels eines Fließbettreaktors gemäß Patentanspruch 1 und eines Verfahrens zur Herstellung des Fließbettreaktors gemäß Patentanspruch 15 gelöst. Vorteilhafte Ausführungsformen sind in den abhängigen Ansprüchen angegeben.

Es wurde erkannt, dass ein verbesserter Fließbettreaktor dadurch bereitgestellt werden kann, dass der Fließbettreaktor einen Verteilerboden, einen Verteilerraum und einen Reaktor mit einem Reaktorraum aufweist. Der Verteilerboden trennt den Reaktorraum räumlich vom Verteilerraum ab. Der Verteilerboden weist eine erste Verteilerplatte und eine auf der ersten Verteilerplatte angeordnete zweite Verteilerplatte auf. Die erste Verteilerplatte ist auf einer zum Verteilerraum zugewandten Seite und die zweite Verteilerplatte ist auf einer dem Reaktorraum zugewandten Seite angeordnet. Die erste Verteilerplatte weist eine erste Anordnung aus sich vom Verteilerraum in einer ersten Richtung zum Reaktorraum erstreckenden ersten Durchgangsöffnungen auf. Die zweite Verteilerplatte weist einen plattenförmig ausgebildeten Anlageabschnitt und eine zweite Anordnung aus Abdeckabschnitten auf. Der Anlageabschnitt ist beabstandet zu der ersten Anordnung der ersten Durchgangsöffnungen mit der ersten Verteilerplatte verbunden, vorzugsweise verschweißt. Jeweils ein Abdeckabschnitt der zweiten Anordnung ist beabstandet in der ersten Richtung zu einer zugeordneten ersten Durchgangsöffnung angeordnet und deckt die zugeordnete erste Durchgangsöffnung zum Reaktorraum ab. Die zweite Verteilerplatte weist an jedem der Abdeckabschnitte eine in einer zweiten Richtung geneigt zu der ersten Richtung versetzt zu der ersten Durchgangsöffnung angeordnete zweite Durchgangsöffnung auf. Über die ersten Durchgangsöffnungen und die zweiten Durchgangsöffnungen ist ein Reaktionsgas zur Behandlung des Feinerzes und zur Ausbildung eines Fließbetts aus Feinerz und Reaktionsgas in den Reaktor einleitbar. Die erste Verteilerplatte ist umfangsseitig fluiddicht mit dem Reaktor verbunden, sodass das Reaktionsgas ausschließlich über die ersten Durchgangsöffnungen und die zweiten Durchgangsöffnungen in den Reaktorraum strömen kann.

Diese Ausgestaltung hat den Vorteil, dass ein besonders gutes und gleichmäßiges Fließbett bereitgestellt werden kann, um das Feinerz mit dem Reaktionsgas zu behandeln. Dabei kann die Behandlung eine Reduktion und/oder eine Oxidation des Feinerzes mit dem Reaktionsgas beinhalten. Ferner hat diese Ausgestaltung den Vorteil, dass bei Abstellen des Fließbettreaktors und/oder bei einem Ausfall einer Zuführung des Reaktionsgases ein Verschütten bzw. ein Verstopfen der ersten Durchgangsöffnung bzw. ein Ausfließen zum darunterliegenden Verteilerraum durch das Abdecken der ersten Durchgangsöffnung mittels jeweils eines zugeordneten Abdeckabschnitts verhindert wird.

In einer weiteren Ausführungsform begrenzen die erste Verteilerplatte und der Abdeckabschnitt jeweils eine Kammer. Die Kammer erstreckt zwischen der ersten Durchgangsöffnung und der zweiten Durchgangsöffnung parallel zu der ersten Verteilerplatte in der zweiten Richtung. Die Kammer hat den Vorteil, dass das über die erste Durchgangsöffnung strömende Reaktionsgas umgelenkt wird. Ferner kann eine Strömungsgeschwindigkeit des Reaktionsgases gegenüber einer Strömungsgeschwindigkeit in der ersten Durchgangsöffnung reduziert werden, sodass lokale Strömungsüberhöhungen, auch als Jets bezeichnet, in dem Fließbett vermieden werden.

In einer weiteren Ausführungsform weist die Kammer eine Kammerquerschnittsfläche und die zweite Durchgangsöffnung eine zweite Querschnittsfläche auf, wobei die Kammerquerschnittsfläche größer als die zweite Querschnittsfläche ist. Diese Ausgestaltung hat den Vorteil, dass Druckschwankungen in dem Reaktionsgas durch die große Kammerquerschnittsfläche und die groß ausgebildete Kammer reduziert werden können. Beim Ausströmen des Reaktionsgases aus der Kammer über die zweite Durchgangsöffnung wird eine Strömungsgeschwindigkeit gegenüber der Strömungsgeschwindigkeit des Reaktionsgases in der Kammer wieder erhöht. Dadurch bildet sich ein besonders stabiles und gleichmäßiges Fließbett im Reaktorraum aus.

In einer weiteren Ausführungsform weist die erste Durchgangsöffnung eine erste Querschnittsfläche und die zweite Durchgangsöffnung eine zweite Querschnittsfläche auf, wobei die zweite Querschnittsfläche größer als die erste Querschnittsfläche ist. Dadurch wird sichergestellt, dass das Reaktionsgas mit einer geringeren Strömungsgeschwindigkeit als in der ersten Durchgangsöffnung in den Reaktorraum einströmt, über den Querschnitt des Reaktorraumes gleichmäßig verteilt wird und dadurch das Fließbett besonders stabil und gleichmäßig ist.

In einer weiteren Ausführungsform weist die Kammer in der zweiten Richtung zwischen der ersten Durchgangsöffnung und der zweiten Durchgangsöffnung eine Kammerlänge 1 auf. Die zweite Durchgangsöffnung weist in der ersten Richtung eine Öffnungshöhe h auf. Die Öffnungshöhe der zweiten Durchgangsöffnung ist geringer als die Kammerlänge. Vorzugsweise beträgt ein Verhältnis der Öffnungshöhe zu der Kammerlänge von 1 bis einschließlich 20, vorzugsweise von einschließlich 5 bis einschließlich 15. Diese Ausgestaltung hat den Vorteil, dass bei einem Ausfall der Förderung des Reaktionsgases in den Verteilerraum oder bei Abschalten der Zuführung des Reaktionsgases sich das Feinerz ohne Probleme auf dem Abdeckabschnitt oberseitig ablegen kann. Das Feinerz bildet in der Kammer einen Schüttkegel mit einem Schüttwinkel aus, jedoch reicht der Schüttkegel nicht bis zu der ersten Durchgangsöffnung. Dadurch wird ein Verstopfen der ersten Durchgangsöffnung bzw. das Ausfließen des Feinerzes in den darunterliegenden Verteilerraumes vermieden. Des Weiteren kann bei Wiederanfahren des Fließbettreaktors ohne Weiteres das in die Kammer eingedrungene Feinerz des Schüttkegels mittels des Reaktionsgases aus der Kammer ausgeblasen werden.

In einer weiteren Ausführungsform weist der Verteilerboden wenigstens einen ersten Bereich und einen zweiten Bereich auf, wobei in dem ersten Bereich die zweiten Durchgangsöffnungen der zweiten Anordnung jeweils eine identische erste Ausrichtung aufweisen. In dem zweiten Bereich weisen die zweiten Durchgangsöffnungen der zweiten Anordnung jeweils eine zweite Ausrichtung auf, die unterschiedlich zu der ersten Ausrichtung ist. Diese Ausgestaltung hat den Vorteil, dass durch die unterschiedliche Ausrichtung gezielt ein Förderstrom zum Transport des Feinerzes in dem Fließbett erzielt werden kann.

In einer weiteren Ausführungsform weist der Fließbettreaktor eine in den Reaktorraum mündende Einfüllöffnung und eine in den Reaktorraum mündende Entnahmeöffnung auf. Die Einfüllöffnung ist gegenüberliegend (in Längsrichtung) zur Entnahmeöffnung angeordnet. Über die Einfüllöffnung ist das Feinerz in den Reaktorraum förderbar. Über die Entnahmeöffnung ist ein Reaktionsprodukt aus einer Reaktion des Feinerzes mit dem Reaktionsgas aus dem Reaktorraum förderbar. Der erste Bereich ist zwischen der Einfüllöffnung und der Entnahmeöffnung angeordnet. In dem ersten Bereich ist die zweite Durchgangsöffnung jeweils auf einer der Entnahmeöffnung zugewandten Seite des Abdeckabschnitts angeordnet. Dadurch wird das Feinerz während der Verweildauer im Reaktorraum von der Einfüllöffnung in Richtung der Entnahmeöffnung durch das Reaktionsgas transportiert.

In einer weiteren Ausführungsform ist der zweite Bereich zwischen der Einfüllöffnung und dem ersten Bereich angeordnet. Die zweite Durchgangsöffnung im zweiten Bereich ist auf einer der Einfüllöffnung abgewandten Seite und auf einer einem Seitenrand des Verteilerbodens zugewandten Seite derart angeordnet, dass das Feinerz von der Einfüllöffnung in Richtung des Seitenrands mittels des ausströmenden Reaktionsgases verteilbar ist. Dadurch kann eine lokale Anhäufung von Feinerz in dem Fließbett vermieden und der gesamte Querschnitt des Fließbettes gleichmäßig genutzt werden.

In einer weiteren Ausführungsform weist der Verteilerboden einen dritten Bereich auf, wobei der dritte Bereich zwischen dem ersten Bereich und der Entnahmeöffnung angeordnet ist. In dem dritten Bereich weisen die zweiten Durchgangsöffnungen jeweils eine zur ersten Ausrichtung unterschiedliche dritte Ausrichtung auf, wobei die zweite Durchgangsöffnung im dritten Bereich jeweils auf einer der Entnahmeöffnung zugewandten Seite und auf einer einem Seitenrand des Verteilerbodens abgewandten Seite des Abdeckabschnitts derart angeordnet ist, dass das Feinerz und/oder ein Reaktionsprodukt aus einer Reaktion des Feinerzes mit dem Reaktionsgas mittels des ausströmenden Reaktionsgases von dem Seitenrand in Richtung der Entnahmeöffnung förderbar/konzentrierbar ist. Dadurch kann das Reaktionsprodukt und/oder können die Reste von dem Feinerz besonders einfach über die Entnahmeöffnung aus dem Reaktorraum gefördert werden.

In einer weiteren Ausführungsform weist der Verteilerboden wenigstens einen Randbereich auf, wobei der Randbereich zwischen dem ersten Bereich und der Entnahmeöffnung und seitlich angrenzend an einen Seitenrand des Verteilerbodens angeordnet ist, wobei die zweite Durchgangsöffnung im Randbereich jeweils auf einer der Entnahmeöffnung zugewandten Seite und auf einer dem Seitenrand des Verteilerbodens zugewandten Seite des Abdeckabschnitts derart angeordnet ist, dass das Feinerz und/oder ein Reaktionsprodukt aus einer Reaktion des Feinerzes mit dem Reaktionsgas mittels des ausströmenden Reaktionsgases in Richtung der Entnahmeöffnung förderbar ist. Diese Ausgestaltung hat den Vorteil, den Randbereich des Fließbettes besonders gut zu fluidisieren und damit negative Randeffekte auf das Fluidisierungsverhalten des Feinerzes und/oder Reaktionsproduktes zu minimieren.

In einer weiteren Ausführungsform ist die zweite Durchgangsöffnung schlitzförmig ausgebildet, wobei die zweite Durchgangsöffnung in der ersten Richtung im Wesentlichen eine konstante Öffnungshöhe aufweist. Diese Ausgestaltung hat den Vorteil, dass eine Anlagerung von Partikeln des Feinerzes in der zweiten Durchgangsöffnung vermieden wird.

In einer weiteren Ausführungsform sind umfangsseitig bezogen auf die Gerade jeweils um eine erste Durchgangsöffnung die erste Verteilerplatte und der Anlageabschnitt abgedichtet. Von besonderem Vorteil ist, wenn vorzugsweise umfangsseitig um die erste Durchgangsöffnung jeweils der Anlageabschnitt stoffschlüssig mit der ersten Verteilerplatte verbunden, vorzugsweise verschweißt, ist. Dadurch kann ein Überströmen von Reaktionsgas von der einen Kammer in die nächste Kammer zwischen der ersten und zweiten Verteilerplatte vermieden werden.

In einer weiteren Ausführungsform weist der Abdeckabschnitt einen ersten Teilbereich und einen zweiten Teilbereich auf, wobei der erste Teilbereich parallel zu der ersten Verteilerplatte verlaufend angeordnet ist. Der erste Teilbereich überdeckt die erste Durchgangsöffnung zumindest abschnittsweise. Der zweite Teilbereich ist schräg geneigt zu dem ersten Teilbereich angeordnet und verbindet den ersten Teilbereich mit dem Anlageabschnitt. Diese Ausgestaltung hat den Vorteil, dass die zweite Verteilerplatte mechanisch besonders spannungsarm ausgebildet ist und dadurch beim Anfahren des Fließbettreaktors und einer damit verbundenen Temperaturerhöhung im Fließbettreaktor auf 750 bis 950 °C, eine ungewollte thermische Verformung der zweiten Verteilerplatte zuverlässig vermieden werden kann.

Von besonderem Vorteil ist, wenn die zweite Anordnung aus Abdeckabschnitten in die zweite Verteilerplatte eingeprägt ist. Dadurch ist sichergestellt, dass die Abdeckabschnitte im Wesentlichen identisch zueinander ausgebildet sind und der Verteilerboden besonders kostengünstig herstellbar ist.

Von besonderem Vorteil ist, wenn im Verfahren zur Herstellung des Fließbettreaktors die erste Verteilerplatte mit der ersten Anordnung von ersten Durchgangsöffnungen bereitgestellt wird. In ein plattenförmiges Blechmaterial wird die zweite Anordnung der Abdeckabschnitte eingeprägt und die zweite Durchgangsöffnung in das Blechmaterial geschnitten, vorzugsweise gestanzt. Die zweite Verteilerplatte wird derart an der ersten Verteilerplatte angeordnet, dass jeweils die erste Durchgangsöffnung durch jeweils einen zugeordneten Abdeckabschnitt abgedeckt wird. Der Anlageabschnitt wird mit der ersten Verteilerplatte mechanisch verbunden.

Nachfolgend wird die Erfindung anhand von FIGN näher erläutert. Dabei zeigen:
- FIG 1: eine schematische Darstellung eines Fließbettreaktors gemäß einer ersten Ausführungsform;
- FIG 2: einen in FIG 1 markierten Ausschnitt A des in FIG 1 gezeigten Verteilerbodens;
- FIG 3: einen in FIG 2 markierten Ausschnitt B der in FIG 2 gezeigten Schnittansicht;
- FIG 4: eine perspektivische Darstellung des Verteilerbodens mit Blickrichtung schräg auf die zweite Verteilerplatte;
- FIG 5: eine schematische Darstellung einer Draufsicht auf einen Fließbettreaktor gemäß einer zweiten Ausführungsform; und
- FIG 6: eine schematische Darstellung einer Draufsicht auf einen Fließbettreaktor gemäß einer dritten Ausführungsform.

In den nachfolgenden FIGN wird zum erleichterten Verständnis auf ein Koordinatensystem Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

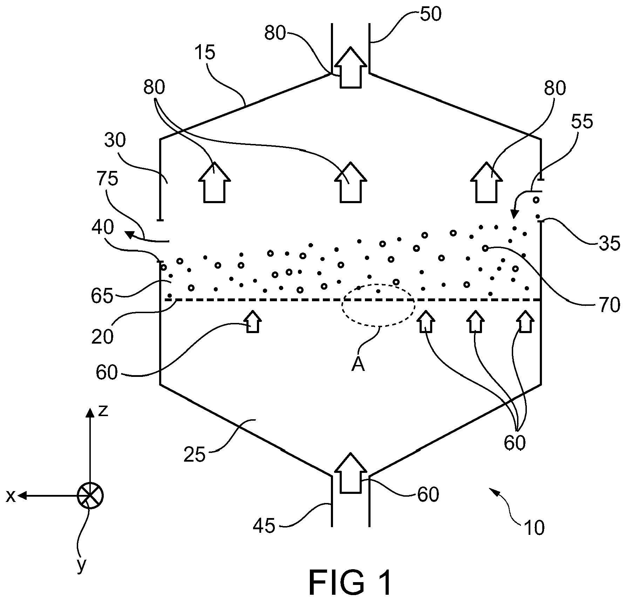

FIG 1 zeigt eine schematische Darstellung eines Fließbettreaktors 10 gemäß einer ersten Ausführungsform.

Der Fließbettreaktor 10 kann Teil einer Reaktoranordnung aus mehreren Fließbettreaktoren 10 sein. Der Fließbettreaktor 10 weist beispielhaft einen Reaktor 15, einen Verteilerboden 20 und einen Verteilerraum 25 auf. Der Reaktor 15 weist einen Reaktorraum 30 auf. Ferner weist der Fließbettreaktor 10 eine Einfüllöffnung 35, eine Entnahmeöffnung 40 sowie eine Reaktionsgaszuführung 45 zum Verteilerraum und eine Reaktionsgasabführung 50 aus dem Reaktorraum auf. Der Verteilerboden 20 trennt räumlich den Verteilerraum 25 von dem Reaktorraum 30 ab. Beispielhaft ist in FIG 1 der Verteilerraum 25 unterhalb des Reaktorraums 30 angeordnet.

Die Einfüllöffnung 35 sowie die Entnahmeöffnung 40 münden in den Reaktorraum 30 und sind seitlich am Reaktor 15 angeordnet. Die Einfüllöffnung 35 ist an einer Seite des Reaktors 15 angeordnet. In x-Richtung gegenüberliegend kann zu der Einfüllöffnung 35 die Entnahmeöffnung 40 angeordnet sein. Dabei ist die Entnahmeöffnung 40 in z-Richtung beispielhaft näher am Verteilerboden 20 angeordnet als die Einfüllöffnung 35. In z-Richtung oberhalb der Einfüllöffnung 35 ist die Reaktionsgasabführung 50 angeordnet. Der Verteilerboden 20 kann derart leicht schräg geneigt zu einer xy-Ebene ausgerichtet sein, so dass der Verteilerboden 20 unterhalb der Einfüllöffnung 35 leicht höher angeordnet ist als an der Entnahmeöffnung 40.

Über die Einfüllöffnung 35 kann im Betrieb des Fließbettreaktors 10 ein oxidisches Feinerz 55, insbesondere ein Eisenerz, in den Reaktorraum 30 gefördert werden. Das Feinerz 55 weist vorzugsweise wenigstens 90 Massenprozent Eisenträgerpartikel 70 mit einer Korngröße kleiner oder gleich 200 µm auf, vorzugsweise mit einem d₃₀ kleiner oder gleich 110 µm. Die Eisenpartikelträger 70 können oxidisch sein und beispielsweise Fe₂O₃ aufweisen.

Über die Entnahmeöffnung 40 kann ein Reaktionsprodukt 75 des behandelten Feinerzes 55 aus dem Reaktorraum 30 gefördert werden. Oberseitig des Reaktorraums 30 kann die Reaktionsgasabführung 50 angeordnet sein und in den Reaktorraum 30 münden. Die Reaktionsgaszuführung 45 ist beispielhaft unterseitig an dem Fließbettreaktor 10 angeordnet und mündet in den Verteilerraum 25.

Im Betrieb des Fließbettreaktors 10 wird vorzugsweise kontinuierlich über die Einfüllöffnung 35 das Feinerz 55 in den Reaktorraum 30 zugefördert. Ferner wird beispielsweise kontinuierlich über die Reaktionsgaszuführung 45 ein Reaktionsgas 60 in den Verteilerraum 25 geführt. Der Verteilerraum 25 ist über den Verteilerboden 20 fluidisch mit dem Reaktorraum 30 verbunden. Beispielhaft ist dabei der Reaktorraum 30 oberhalb des Verteilerbodens 20 und der Verteilerraum 25 unterhalb des Verteilerbodens 20 angeordnet. Dabei kann der Verteilerboden 20 in einer xy-Ebene angeordnet sein.

Das Reaktionsgas 60 wird über die Reaktionsgaszuführung 45 vorzugsweise druckbeaufschlagt in den Verteilerraum 25 eingeführt. Das Reaktionsgas 60 wird durch den Verteilerboden 20 im Verteilerraum 25 verteilt und tritt über den Verteilerboden 20 in den Reaktorraum 30 ein. Diese Strömungsrichtung stellt sich aufgrund einer Druckdifferenz des Reaktionsgases 60 zwischen der Reaktionsgaszuführung 45 und der Reaktionsgasabführung 50 ein.

Das Reaktionsgas 60 wird derart durch den Verteilerboden 20 in den Reaktorraum 30 geführt, dass sich oberhalb des Verteilerbodens 20 ein Fließbett 65 aus dem Feinerz 55 und dem Reaktionsgas 60 ausbildet. Das Fließbett 65 kann auch als Wirbelschicht bezeichnet werden. In dem Fließbett 65 wird das Feinerz 55 durch das aufwärtsströmende Reaktionsgas 60 in einen fluidisierten Zustand versetzt.

In z-Richtung erstreckt sich das Fließbett 65 zwischen dem Verteilerboden 20 und einer unteren Kante der Entnahmeöffnung 40. In x- und/oder y-Richtung erstreckt sich das Fließbett 65 im Wesentlichen über eine gesamte Erstreckung des Verteilerbodens 20.

Das Reaktionsgas 60 kann insbesondere als Reduktionsgas ausgebildet sein. So kann beispielsweise das Reaktionsgas 60 Wasserstoff H₂ aufweisen und insbesondere aus technischem reinem Wasserstoff H₂ bestehen oder eine Mischung aus Wasserstoff H₂ mit einem oder mehreren weiteren Gasen aufweisen.

Im Fließbett 65 reagiert das Reaktionsgas 60 mit dem Feinerz 55 zu dem Reaktionsprodukt 75. Beispielsweise wirkt der Wasserstoff H₂ reduzierend auf die oxidischen Eisenpartikelträger 70.

Das Reaktionsprodukt 75 kann beispielsweise ein Eisenschwamm, beispielsweise mit einem Metallisierungsgrad von über 90 % sein. Das Reaktionsprodukt 75 weist beispielsweise einen höheren Metallisierungsgrad auf als das über die Einfüllöffnung 35 zugeführte Feinerz 55. Der Metallisierungsgrad ist dabei ein Verhältnis eines Massenanteils von metallisch vorliegendem Eisen zum gesamten vorhandenen Eisen im Reaktionsprodukt 75. Es wird darauf hingewiesen, dass je nach Verfahrensführung in dem Fließbettreaktor 10 der Metallisierungsgrad des Reaktionsprodukts 75 unterschiedlich sein kann.

Durch die Reaktion des Reaktionsgases 60 mit dem Feinerz 55 in der Behandlung des Feinerzes 55 stellt sich im Fließbett 65 eine Temperatur zwischen 500 °C und 900 °C ein. Da das Fließbett 65 direkt oberhalb des Verteilerbodens 20 sich ausbildet, wird der Verteilerboden 20 ebenso auf die Temperatur zwischen 500 °C und 900 °C erwärmt.

Ferner werden in dem Fließbett 65 das Feinerz 55 und dessen Eisenpartikelträger 70 und das Reaktionsprodukt 75 von der Einfüllöffnung 35 hin zu der Entnahmeöffnung 40 transportiert, wobei an der Entnahmeöffnung 40 das Reaktionsprodukt 75 des Feinerzes 55 mit dem Reaktionsgas 60 aus dem Reaktorraum 30 entnommen wird.

Ein verbrauchtes Reaktionsgas 80 wird aufgrund der Druckdifferenz zwischen der Reaktionsgaszuführung 45 und der Reaktionsgasabführung 50 über die Reaktionsgasabführung 50 aus dem Reaktorraum 30 abgeführt. Das verbrauchte Reaktionsgas 80 kann beispielsweise Wasserdampf aufweisen.

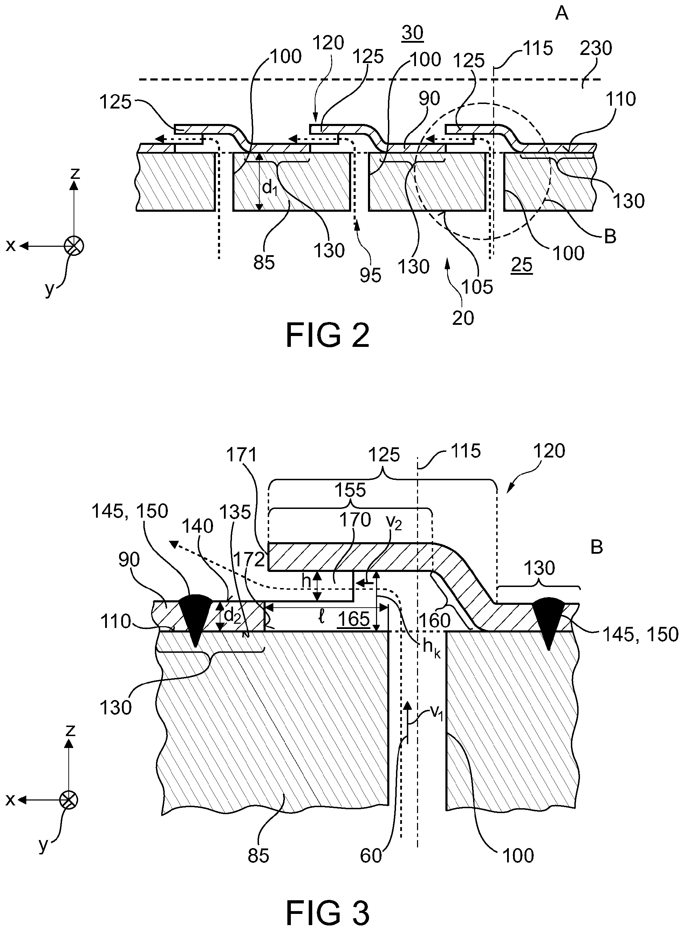

FIG 2 zeigt einen in FIG 1 markierten Ausschnitt A des in FIG 1 gezeigten Verteilerbodens 20.

Der Verteilerboden 20 weist eine erste Verteilerplatte 85 und eine zweite Verteilerplatte 90 auf. Die erste Verteilerplatte 85 ist unterhalb der zweiten Verteilerplatte 90 angeordnet.

Dabei ist die erste Verteilerplatte 85 auf einer dem Verteilerraum 25 zugewandten Seite angeordnet. Die erste Verteilerplatte 85 ist plattenförmig ausgebildet und erstreckt sich im Wesentlichen in einer xy-Ebene.

Die erste Verteilerplatte 85 weist eine erste Unterseite 105 und eine erste Oberseite 110 auf, wobei die erste Oberseite 110 auf einer dem Reaktorraum 30 zugewandten Seite angeordnet ist. Die erste Unterseite 105 grenzt an den Verteilerraum 25 an. Die erste Verteilerplatte 85 weist eine erste Materialstärke d₁ auf.

Die erste Verteilerplatte 85 weist eine erste Anordnung 95 von ersten Durchgangsöffnungen 100 auf. In der Ausführungsform ist eine Vielzahl von ersten Durchgangsöffnungen 100 in der ersten Verteilerplatte 85 eingebracht. Beispielhaft sind die ersten Durchgangsöffnungen 100 identisch zueinander ausgebildet, sodass das im Folgenden für eine der ersten Durchgangsöffnungen 100 Erläuterte ebenso für die weiteren ersten Durchgangsöffnungen 100 gilt. Selbstverständlich können die ersten Durchgangsöffnungen 100 auch unterschiedlich zueinander ausgebildet sein.

Die erste Durchgangsöffnung 100 erstreckt sich von der ersten Unterseite 105, also vom Verteilerraum 25, entlang einer Geraden 115, die im Wesentlichen parallel zur z-Achse normal zur ersten Verteilerplatte 85 ausgerichtet ist, in einer ersten Richtung hin zu der ersten Oberseite 110 und somit zum Reaktorraum 30. Die erste Durchgangsöffnung 100 kann beispielsweise einen kreisförmigen Querschnitt aufweisen. Eine erste Querschnittsfläche der ersten Durchgangsöffnung 100 kann beispielsweise 0,5 mm² bis 3 mm² betragen.

Auf der ersten Oberseite 110 ist die zweite Verteilerplatte 90 angeordnet. Die zweite Verteilerplatte 90 weist eine zweite Anordnung 120 von Abdeckabschnitten 125 und einen Anlageabschnitt 130 auf.

FIG 3 zeigt einen in FIG 2 markierten Ausschnitt B der in FIG 2 gezeigten Schnittansicht.

Die zweite Verteilerplatte 90 ist einstückig und materialeinheitlich ausgebildet und weist ein dünnwandiges Material auf. Die zweite Verteilerplatte 90 weist eine zweite Unterseite 135 und eine zweite Oberseite 140 auf. Die zweite Unterseite 135 ist auf einer der ersten Verteilerplatte 85 und dem Verteilerraum 25 zugewandten Seite angeordnet. Die zweite Oberseite 140 schließt sich an den Reaktorraum 30 an und begrenzt den Reaktorraum 30 unterseitig. Die zweite Verteilerplatte 90 deckt die erste Oberseite 110 der ersten Verteilerplatte 85 im Wesentlichen vollständig ab und die zweite Verteilerplatte 90 wird mechanisch durch die erste Verteilerplatte 85 gestützt.

Der Anlageabschnitt 130 ist plattenförmig ausgebildet und liegt mit der zweiten Unterseite 135 an der ersten Oberseite 110 der ersten Verteilerplatte 85 an. Vorzugsweise ist der Anlageabschnitt 130 mittels einer stoffschlüssigen Verbindung 145, beispielsweise mit einer Schweißverbindung 150, mit der ersten Verteilerplatte 85 verbunden. Diese Ausgestaltung stellt sicher, dass auch bei thermischer Belastung der zweiten Verteilerplatte 90 ein Ablösen oder Abheben der zweiten Verteilerplatte 90 von der ersten Verteilerplatte 85 verhindert wird.

Der Anlageabschnitt 130 ist in x- und/oder y-Richtung versetzt zu der ersten Durchgangsöffnung 100 angeordnet. Dadurch wird ein Verschließen der ersten Durchgangsöffnung 100 an der ersten Oberseite 110 durch den Anlageabschnitt 130 verhindert. Der Anlageabschnitt 130 weist eine zweite Materialstärke d₂ auf, die deutlich geringer ist, als die erste Materialstärke d₁ der ersten Verteilerplatte 85.

Wie bereits oben erläutert weist die zweite Anordnung 120 eine Vielzahl von Abdeckabschnitten 125 auf. Dabei entspricht eine erste Anzahl von ersten Durchgangsöffnungen 100 einer zweiten Anzahl von Abdeckabschnitten 125. Im Folgenden wird der in FIG 3 gezeigte Abdeckabschnitt 125 exemplarisch erläutert. Das im Folgenden Erläuterte gilt ebenso für die weiteren Abdeckabschnitte 125 der zweiten Anordnung 120.

Der Abdeckabschnitt 125 ist in die zweite Verteilerplatte 90 eingeprägt und ist in z-Richtung beabstandet zu der ersten Oberseite 110 der ersten Verteilerplatte 85 derart angeordnet, dass die erste Durchgangsöffnung an der ersten Oberseite 110 offen ist. Dabei ist in z-Richtung der Abdeckabschnitt 125 überdeckend zu der ersten Durchgangsöffnung 100 angeordnet. Dabei wird unter einer Überdeckung in z-Richtung verstanden, dass bei Projektion zweier Komponenten, beispielsweise des Abdeckabschnitts 125 und der ersten Durchgangsöffnung 100, in z-Richtung in eine Projektionsebene, die beispielsweise als xy-Ebene ausgebildet ist, sich die Komponenten, in FIG 3 der Abdeckabschnitt 125 und die Durchgangsöffnung 100, in der Projektionsebene überlappen. Dadurch deckt der Abdeckabschnitt 125 die erste Durchgangsöffnung 100 zu dem Reaktorraum 30 hin ab und schützt die erste Durchgangsöffnung gegenüber dem Fließbett 65.

Der Abdeckabschnitt 125 weist einen ersten Teilbereich 155 und einen zweiten Teilbereich 160 auf. Der erste Teilbereich 155 verläuft im Wesentlichen parallel zu der ersten Oberseite 110 und ist in z-Richtung versetzt zu der ersten Oberseite 110 angeordnet. Der erste Teilbereich 155 kann dabei plattenförmig ausgebildet sein. In einer Draufsicht kann der erste Teilbereich 155 kreisförmig in x- und y-Richtung ausgebildet sein.

Der erste Teilbereich 155 ist über den zweiten Teilbereich 160 mit dem Anlageabschnitt 130 mechanisch verbunden. Der zweite Teilbereich 160 kann teilweise über die erste Durchgangsöffnung 100 ragen und verläuft schräg geneigt zu dem ersten Teilbereich 155 und dem Anlageabschnitt 130.

Der Abdeckabschnitt 125 begrenzt zusammen mit der ersten Oberseite 110 der ersten Verteilerplatte 85 eine Kammer 165. Die Kammer 165 erstreckt sich in ihrer Haupterstreckungsrichtung im Wesentlichen in x-Richtung und y-Richtung. Eine Höhe h_{K} der Kammer 165 ist deutlich geringer als die Erstreckung der Kammer 165 in x- und/oder y-Richtung.

In der Kammer 165 mündet an der ersten Oberseite 110 die erste Durchgangsöffnung 100. In z-Richtung zwischen dem Anlageabschnitt 130 und dem ersten Teilbereich 155 ist eine zweite Durchgangsöffnung 170 in der zweiten Verteilerplatte 90 eingebracht. Die zweite Durchgangsöffnung 170 ist schlitzartig ausgebildet und weist in z-Richtung im Wesentlichen eine konstante Öffnungshöhe h auf. Die Öffnungshöhe h kann beispielsweise 0,5 mm bis 2 mm betragen. Dabei ist die zweite Durchgangsöffnung 170 derart ausgestaltet, dass eine zweite Querschnittsfläche der zweiten Durchgangsöffnung 170 deutlich größer ist als die erste Querschnittsfläche der ersten Durchgangsöffnung 100. Die Kammer 165 verbindet die erste Durchgangsöffnung 100 mit der zweiten Durchgangsöffnung 170 fluidisch.

Die zweite Durchgangsöffnung 170 kann sich im Wesentlichen über ein Winkelsegment in einer xy-Ebene von beispielsweise 70° bis 120° erstrecken. Dabei verläuft die zweite Durchgangsöffnung beispielhaft auf einer Kreisbahn mit einem Mittelpunkt versetzt zu der Geraden 115. Die zweite Querschnittsfläche bildet dabei eine Öffnungsfläche der zweiten Durchgangsöffnung und ist mathematisch als ein Produkt des Winkelsegments (in Bogenmaß), der Öffnungshöhe h und einer Bogenlänge der zweiten Durchgangsöffnung auf der Kreisbahn in einer xy-Ebene. Dabei ist die zweite Durchgangsöffnung 170 derart in die zweite Verteilerplatte 90 eingeschnitten oder eingestanzt, dass ein freies Ende des ersten Teilbereichs 155, das an die zweite Durchgangsöffnung 170 angrenzt, mit einer Schnittfläche 172 des Anlageabschnitts 130 in z-Richtung überdeckend angeordnet ist.

Die Kammer 165 weist im Wesentlichen eine zylinderförmige Grundform auf. Die Kammer 165 weist eine deutlich größere Kammerquerschnittsfläche (in einer xy-Ebene) auf als die erste Querschnittsfläche und/oder die zweite Querschnittsfläche. In x-Richtung und/oder in y-Richtung weist die Kammer 165 zwischen der zweiten Durchgangsöffnung 170 und der ersten Durchgangsöffnung 100 eine Kammerlänge 1 auf. Die Kammerlänge 1 ist deutlich größer als die Öffnungshöhe h der zweiten Durchgangsöffnung 170. Von besonderem Vorteil ist, wenn ein Verhältnis der Kammerlänge 1 zu der Öffnungshöhe h einschließlich 1 bis einschließlich 20 beträgt.

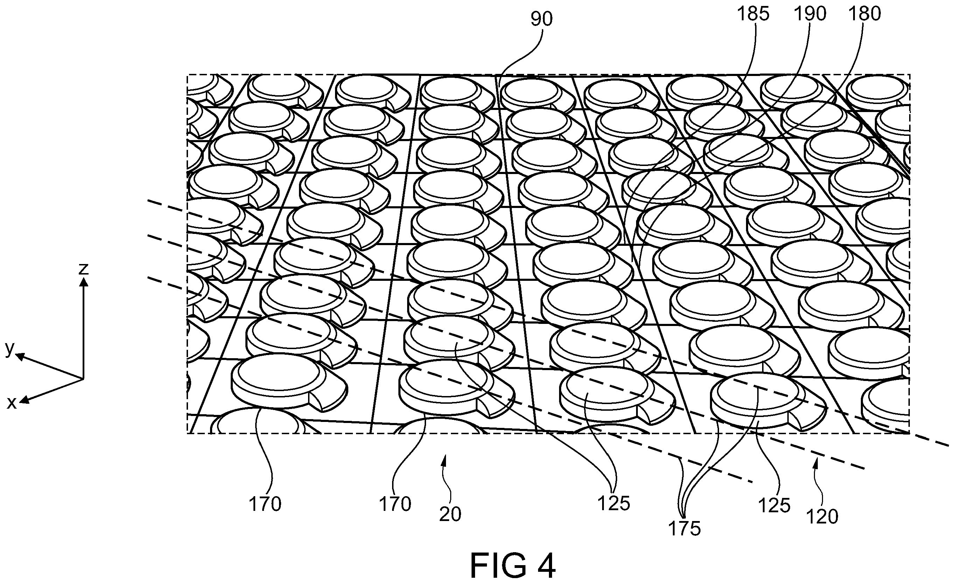

FIG 4 zeigt eine perspektivische Darstellung des Verteilerbodens 20 mit Blickrichtung schräg auf die zweite Verteilerplatte 90.

Die Abdeckabschnitte 125 der zweiten Anordnung 120 sind beispielhaft in mehreren in x-Richtung zueinander versetzt angeordneten Reihen 175 angeordnet. In jeder Reihe 175 sind die Abdeckabschnitte 125 in y-Richtung beabstandet zueinander angeordnet. Dabei erstreckt sich zwischen den Abdeckabschnitten 125 der Anlageabschnitt 130. Vorzugsweise ist eine erste Ausrichtung der zweiten Durchgangsöffnung 170 an jedem Abdeckabschnitt 125 identisch.

Die stoffschlüssige Verbindung 145 ist in der Ausführungsform durch mehrere gekreuzt ausgebildete Schweißnähte 180, 185 ausgebildet. Jede der Schweißnähte 180, 185 ist beispielhaft geradlinig und durchgehend ausgebildet. Jeweils zwei parallel verlaufende erste Schweißnähte 180 kreuzen jeweils zwei parallel verlaufende zweite Schweißnähte 185 und bilden dabei eine Raute 190 aus, wobei durch die Raute 190 der Abdeckabschnitt 125 umfangsseitig eingeschlossen ist. Jede der Schweißnähte 180, 185 ist dabei so ausgeführt, dass ein Einbrand der Schweißnaht 180, 185 sich bis in die erste Verteilerplatte 85 erstreckt. Die Schweißnaht 180, 185 ist im Wesentlichen unterbrechungsfrei geführt, sodass umfangsseitig die Kammer 165 fluiddicht durch die stoffschlüssige Verbindung 145 am Anlageabschnitt 130 abgedichtet ist.

Im Folgenden wird die Funktionsweise des Verteilerbodens 20 anhand der FIGN 1 bis 4 erläutert. Wie bereits im Rahmen von FIG 1 erläutert wird das Reaktionsgas 60 über den Verteilerboden 20 in den Reaktorraum 30 geführt.

Dabei durchströmt das Reaktionsgas 60 die ersten Durchgangsöffnungen 100 im Wesentlichen parallel zu der Geraden 115(vgl. FIGN 3 und 4) in einer ersten Richtung. Aufgrund der geringen ersten Querschnittsfläche weist das Reaktionsgas 60 in der ersten Durchgangsöffnung 100 eine relativ hohe erste Geschwindigkeit v₁ auf.

Das durch eine erste Durchgangsöffnung 100 strömende Reaktionsgas 60 tritt in die jeweils zugeordnete Kammer 165 ein. Aufgrund der großvolumigen Ausgestaltung der Kammer 165 verlangsamt sich das Reaktionsgas 60 drastisch und strömt mit einer zweiten Geschwindigkeit v₂ in der Kammer 165. Die zweite Geschwindigkeit v₂ ist deutlich geringer als die erste Geschwindigkeit v₁. Ferner lenkt der Abdeckabschnitt 125 das Reaktionsgas 60 im Wesentlichen um 90° zu der Geraden 115 in eine zweite Richtung ab, sodass das Reaktionsgas 60 in der Kammer 165 im Wesentlichen in x- und/oder y-Richtung strömt (vgl. FIG 3).

Das Reaktionsgas 60 tritt an der zweiten Durchgangsöffnung 170 aus der Kammer 165 aus. Dabei durchströmt das Reaktionsgas 60 die zweite Durchgangsöffnung 170 mit einer dritten Geschwindigkeit v₃, die deutlich geringer als die erste Geschwindigkeit v₁ ist. Die dritte Geschwindigkeit v₃ kann größer als die zweite Geschwindigkeit v₂ in der Kammer 165 sein.

Das Reaktionsgas 60 wird aufgrund der Druckdifferenz zwischen dem Verteilerraum 25 und der Reaktionsgasabführung 50 nach Durchströmung der zweiten Durchgangsöffnung 170 von der zweiten Verteilerplatte 90 im Wesentlichen in z-Richtung umgelenkt und bildet zusammen mit dem Feinerz 55 oberhalb der zweiten Verteilerplatte 90 das Fließbett 65 aus.

Diese Führung des Reaktionsgases 60 hat den Vorteil, dass lokale Geschwindigkeitsüberhöhungen des Reaktionsgases 60 durch das flächige, über das Winkelsegment der zweiten Durchgangsöffnung 170 mit niedriger dritter Geschwindigkeit v₃ ausströmende Reaktionsgas 60 vermieden werden. Dadurch können lokale Gaskanäle in dem Fließbett 65 vermieden werden und eine möglichst gleichmäßige Verteilung des Reaktionsgases über die gesamte Querschnittsfläche des Fließbettreaktors erzielt werden. Ferner kann eine Druckpulsation des Reaktionsgases 60 in der ersten Durchgangsöffnung 100 durch die großvolumige Ausgestaltung der Kammer 165 gedämpft werden. Dadurch wird ein besonders stabiles Fließbett 65 mit dem Feinerz 55 erzeugt.

Durch die umfangsseitige Abdichtung der Kammer 165 durch die Schweißnähte 180, 185 wird ein Übertritt des Reaktionsgases 60 von der Kammer 165 zu einer anderen Kammer 165 verhindert. Dadurch wird jeweils ein zuverlässiger und gleichmäßiger Volumenstrom des Reaktionsgases 60 durch alle Kammern 165 des Verteilerbodens 20 sichergestellt. Dies beruhigt das Fließbett 65 im Reaktorraum 30 weiter und verhindert lokale Defluidisierungen.

Wird der Fließbettreaktor 10 abgestellt oder fällt die Gasversorgung 60 aus, bricht das Fließbett 65 zusammen. Infolgedessen bildet sich eine Schicht 230 aus Feinerz 55 und/oder des Reaktionsprodukts 75 auf der zweiten Oberseite 140 aus (die Schicht 230 ist strichliert in FIG 2 angedeutet). Zwar kann über die zweite Durchgangsöffnung 170 ein geringer Teil von dem Feinerz 55 und/oder dem Reaktionsprodukt 75 in die Kammer 165 eindringen und einen Schüttkegel in jeder Kammer 165 ausbilden, jedoch ist durch die Kammerlänge 1 die zweite Durchgangsöffnung 170 so weit von der ersten Durchgangsöffnung 100 in x- und/oder y-Richtung beabstandet angeordnet, dass das Feinerz 55 und/oder das Reaktionsprodukt 75 nicht die erste Durchgangsöffnung 100 erreicht.

Bei Wiederinbetriebnahme kann das in die Kammer 165 eingedrungene Feinerz 55 und/oder das Reaktionsprodukt 75 mittels des Reaktionsgases 60 aus der Kammer 165 ausgeblasen werden, da die fluidische Verbindung der Kammer 165 über die erste Durchgangsöffnung 100 zu dem Verteilerraum 25 sichergestellt ist.

Um den Verteilerboden 20 herzustellen, wird in einem ersten Verfahrensschritt ein erster plattenförmiger Rohling bereitgestellt. Der erste plattenförmige Rohling wird zugeschnitten und die ersten Durchgangsöffnungen 100 zur Ausbildung der ersten Anordnung 95 werden in den ersten Rohling eingebracht. Dies kann beispielsweise durch ein Laserschneiden oder ein Bohren der ersten Durchgangsöffnungen 100 in den ersten Rohling erfolgen.

In einem zweiten Verfahrensschritt wird ein plattenförmiges Blechmaterial bereitgestellt. In das Blechmaterial wird die zweite Anordnung 120 aus Abdeckabschnitten 125 in das Blechmaterial eingeprägt und die zweiten Durchgangsöffnungen 170 werden in das Blechmaterial geschnitten. Dies kann beispielsweise in einem Stanz-Biege-Schritt erfolgen.

In einem dritten Verfahrensschritt wird die zweite Verteilerplatte 90 mit der zweiten Unterseite 135 auf der ersten Oberseite 110 derart positioniert, dass die ersten Durchgangsöffnungen 100 nicht durch den Anlageabschnitt 130 verdeckt werden und die ersten Durchgangsöffnungen 100 gegenüberliegend zu dem Abdeckabschnitt 125 in z-Richtung angeordnet sind. Dadurch wird jeweils eine erste Durchgangsöffnung 100 durch einen zugeordneten Abdeckabschnitt 125 abgedeckt und die Kammer 165 ausgebildet.

In einem vierten Verfahrensschritt wird die stoffschlüssige Verbindung 145 zur Verbindung des Anlageabschnitts 130 mit der ersten Verteilerplatte 85 ausgebildet. Dabei kann im Rahmen beispielsweise eines Laserschweißverfahrens mittels der Schweißnähte 180, 185 die erste Verteilerplatte 85 mit der zweiten Verteilerplatte 90 verschweißt werden. Ferner wird dadurch die Kammer 165 in Umfangsrichtung fluiddicht abgedichtet. Die Schweißnähte 180, 185 sind dabei vorzugsweise durchlaufend ausgebildet. Dadurch kann der Verteilerboden 20 besonders einfach in wenigen Verfahrensschritten hergestellt werden.

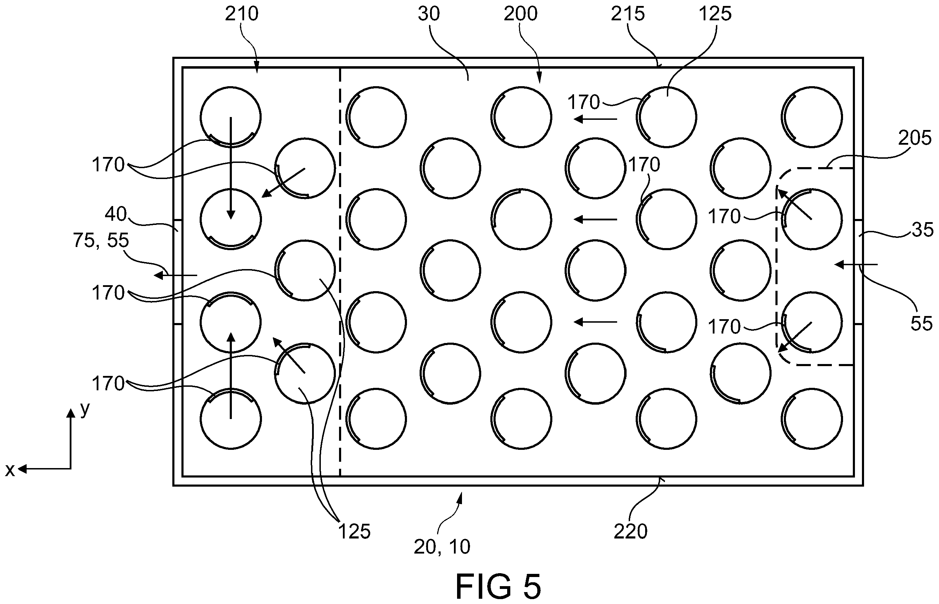

FIG 5 zeigt eine schematische Darstellung einer Draufsicht auf einen Fließbettreaktor 10 gemäß einer zweiten Ausführungsform.

Der Fließbettreaktor 10 in FIG 5 ist im Wesentlichen identisch zu dem in den FIGN 1 bis 4 erläuterten Fließbettreaktor 10 ausgebildet. Im Folgenden wird ausschließlich auf die Unterschiede des in FIG 5 gezeigten Fließbettreaktors 10 gegenüber dem in den FIGN 1 bis 4 gezeigten Fließbettreaktor 10 gemäß der ersten Ausführungsform eingegangen.

Der Verteilerboden 20 weist einen ersten Bereich 200 und wenigstens einen zweiten Bereich 205 auf. Zusätzlich kann der Verteilerboden 20 einen dritten Bereich 210 aufweisen. Der Verteilerboden 20 erstreckt sich in seiner Haupterstreckungsrichtung im Wesentlichen in x-Richtung. Dabei entspricht beispielhaft die x-Richtung einer Förderrichtung des Feinerzes 55 zwischen der Einfüllöffnung 35 und der Entnahmeöffnung 40. Seitlich in y-Richtung wird der Verteilerboden 20 durch einen Seitenrand 215, 220 begrenzt.

Der erste Bereich 200 ist in x-Richtung zwischen der Einfüllöffnung 35 und der Entnahmeöffnung 40 angeordnet. Die zweiten Durchgangsöffnungen 170 sind als teilringförmige Segmente schematisch in FIG 5 angedeutet, um die Anordnung der zweiten Durchgangsöffnung 170 zu zeigen. Im Idealfall ist jedoch in der Draufsicht die zweite Durchgangsöffnung 170 nicht sichtbar.

Im ersten Bereich 200 weisen die zweiten Durchgangsöffnungen 170 die identische erste Ausrichtung auf. Die erste Ausrichtung der zweiten Durchgangsöffnungen 170 ist vorzugsweise so gewählt, dass die zweite Durchgangsöffnung 170 auf einer zur Einfüllöffnung 35 abgewandten Seite des Abdeckabschnitts 125 angeordnet ist. Ferner sind die zweiten Durchgangsöffnungen 170 im ersten Bereich 200 so ausgerichtet, dass ein Volumenstrom des Reaktionsgases 60 im Wesentlichen in Richtung der Entnahmeöffnung 40 parallel zur x-Achse ausgerichtet ist.

Im zweiten Bereich 205, der in x-Richtung zwischen dem ersten Bereich 200 und der Einfüllöffnung 35 angeordnet ist, weisen die zweiten Durchgangsöffnungen 170 eine zweite Ausrichtung auf. Die zweite Ausrichtung ist beispielsweise unterschiedlich zu der ersten Ausrichtung der zweiten Durchgangsöffnungen 170 im ersten Bereich 200. Die zweiten Durchgangsöffnungen 170 im zweiten Bereich 205 können beispielsweise unterschiedlich zueinander ausgerichtet sein. Beispielsweise ist die zweite Ausrichtung der zweiten Durchgangsöffnung 170 im zweiten Bereich 205 so gewählt, dass die zweite Durchgangsöffnung 170 auf einer zur Einfüllöffnung 35 abgewandten Seite des Abdeckabschnitts 125 angeordnet ist. Ferner sind die zweiten Durchgangsöffnungen 170 im zweiten Bereich 205 voneinander weg zeigend in Richtung jeweils des nächstliegenden Seitenrands 215, 220 ausgerichtet.

Im dritten Bereich 210 weisen die zweiten Durchgangsöffnungen 170 eine dritte Ausrichtung auf. Die dritte Ausrichtung ist beispielhaft unterschiedlich zu der ersten Ausrichtung und/oder zu der zweiten Ausrichtung. Dabei sind im dritten Bereich 210 die zweiten Durchgangsöffnungen 170 auf einer zur Entnahmeöffnung 40 zugewandten Seite der Abdeckabschnitte 125 angeordnet.

Im dritten Bereich 210 sind die zweiten Durchgangsöffnungen 170 auf einer der Einfüllöffnung 35 abgewandten Seite, aber ebenso auf jeweils einer dem nächstliegenden Seitenrand 215, 220 abgewandten Seite des Abdeckabschnitts 125 angeordnet. Die zweiten Durchgangsöffnungen 170 sind dabei auf der zur Entnahmeöffnung 40 zugewandten Seite der Abdeckabschnitte 125 angeordnet.

Im Betrieb des in FIG 5 gezeigten Fließbettreaktors 10 wird über die Einfüllöffnung 35 das Feinerz 55 in den Reaktorraum 30 gefördert. Dabei wird das Feinerz 55 zuerst in den zweiten Bereich 205 gefördert. Die zum Seitenrand 215, 220 hin und zur Entnahmeöffnung 40 hin gerichtete zweite Ausrichtung der zweiten Durchgangsöffnungen 170 bewirkt, dass im Fließbett 65 das Feinerz 55 von der Entnahmeöffnung 40 in y-Richtung durch das im zweiten Bereich 205 ausströmende Reaktionsgas 60 wegtransportiert wird und über eine gesamte Breite des Verteilerbodens 20 verteilt wird. Dadurch kann ein besonders großer Massenstrom von Feinerz 55 in den Reaktorraum 30 gefördert werden. Das Reaktionsgas 60 strömt dabei schräg zur x- und y-Achse geneigt aus der zweiten Durchgangsöffnung 170 aus und verteilt in y-Richtung das Feinerz 55 über die gesamte Breite des Verteilerboden 20 und fördert das Feinerz 55 in den ersten Bereich 200.

Verteilt über die gesamte Breite wird das Feinerz 55 vor allem im ersten Bereich 200 behandelt und mit dem Reaktionsgas 60 zu dem Reaktionsprodukt 75 verarbeitet. Dabei werden das Feinerz 55 und das Reaktionsprodukt 75 in x-Richtung von der Einfüllöffnung 35 in Richtung der Entnahmeöffnung 40 weiter transportiert. Dabei strömt im Wesentlichen das Reaktionsgas 60 in x-Richtung aus der zweiten Durchgangsöffnung 170 im ersten Bereich 200 aus und transportiert das Feinerz 55 bzw. das Reaktionsprodukt 75 in Richtung der Entnahmeöffnung 40.

Am dritten Bereich 210 angelangt wird das Feinerz 55 bzw. das Reaktionsprodukt 75 durch die dritte Ausrichtung der zweiten Durchgangsöffnungen 170 vom Seitenrand 215, 220 in Richtung der Entnahmeöffnung 40 nach innen hin konzentriert und gefördert. Dadurch kann das Reaktionsprodukt 75 besonders gut über die Entnahmeöffnung 40 aus dem Reaktorraum 30 entnommen werden, ohne dass zusätzliche mechanische Hilfsmittel notwendig sind, um das Reaktionsprodukt 75 in Richtung der Entnahmeöffnung zu fördern.

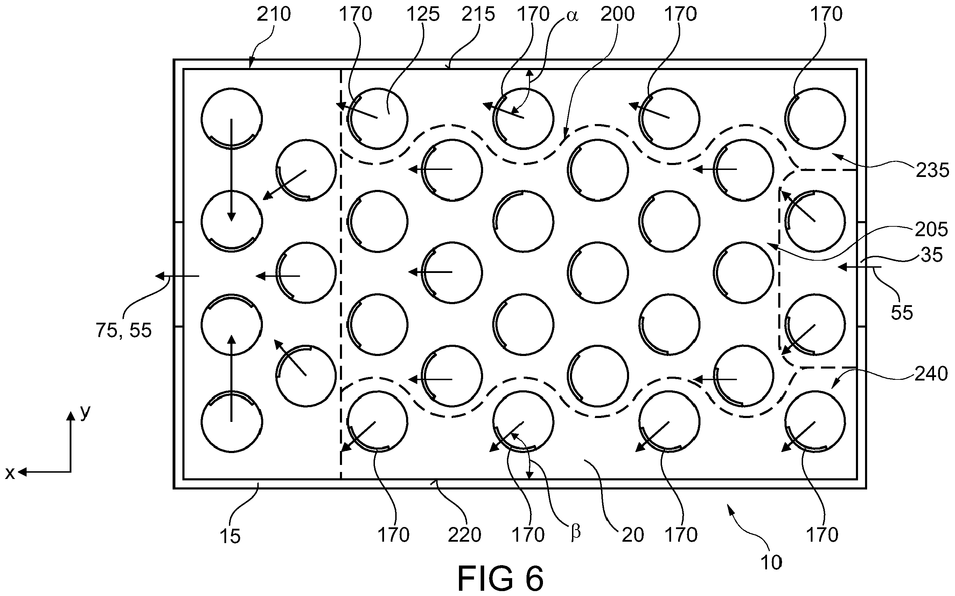

FIG 6 zeigt eine schematische Darstellung einer Draufsicht auf einen Fließbettreaktor 10 gemäß einer dritten Ausführungsform.

Der Fließbettreaktor 10 in FIG 6 ist im Wesentlichen identisch zu dem in FIG 5 erläuterten Fließbettreaktor 10 ausgebildet. Im Folgenden wird ausschließlich auf die Unterschiede des in FIG 6 gezeigten Fließbettreaktors 10 gegenüber dem in den FIG 5 gezeigten Fließbettreaktor 10 gemäß der zweiten Ausführungsform eingegangen.

Zusätzlich weist der Verteilerboden 20 in FIG 6 einen ersten Randbereich 235 und vorzugsweise einen zweiten Randbereich 240 auf. In der Ausführungsform sind beispielhaft der erste Randbereich 235 und der zweite Randbereich 240 vorgesehen. Auf zumindest einen der beiden Randbereiche 235, 240 kann auch verzichtet werden. In x-Richtung sind beispielhaft der erste Randbereich 235 und der zweite Randbereich 240 zwischen der Einfüllöffnung 35 und dem dritten Bereich 210 angeordnet. In y-Richtung sind der erste Randbereich 235 und der zweite Randbereich 240 versetzt zu der Einfüllöffnung 35 angeordnet. Dabei schließt sich der erste Randbereich 235 in Querrichtung an den ersten Seitenrand 215 an. Der erste Randbereich 235 grenzt innenseitig an den ersten Bereich 200 und vorzugsweise an den zweiten Bereich 205 an. Ferner schließt sich der zweite Randbereich 240 in Querrichtung an den zweiten Seitenrand 220 an und ist in Querrichtung gegenüberliegend zu dem ersten Randbereich 235 angeordnet. Der zweite Randbereich 240 grenzt innenseitig an den ersten Bereich 200 und vorzugsweise an den zweiten Bereich 205 an.

Im ersten Randbereich 235 ist die zweite Durchgangsöffnung 170 schräg nach außen in Richtung dem ersten Seitenrand 215 gerichtet und vom ersten Bereich 200 weg gerichtet. Ferner ist die zweite Durchgangsöffnung 170 in Längsrichtung auf der zum dritten Bereich 210 zugewandten Seite des Abdeckabschnitts 125 angeordnet. Die Ausrichtung der zweiten Durchgangsöffnung 170 ist beispielsweise so gewählt, dass das Reaktionsgas 60 in einem ersten spitzen Winkel α in Richtung dem ersten Seitenrand 215 und in x-Richtung in Richtung dem dritten Bereich 210 strömt. Der Winkel α kann 30° bis 60° betragen.

Im zweiten Randbereich 240 ist die zweite Durchgangsöffnung 170 schräg nach außen in Richtung dem zweiten Seitenrand 220 gerichtet und somit vom ersten Bereich 200 weg gerichtet. Ferner ist die zweite Durchgangsöffnung 170 in Längsrichtung auf der zum dritten Bereich 210 und dem zweiten Seitenrand 220 zugewandten Seite des Abdeckabschnitts 125 angeordnet. Die Ausrichtung der zweiten Durchgangsöffnung 170 ist beispielsweise so gewählt, dass das Reaktionsgas 60 in einem zweiten spitzen Winkel β in Richtung dem zweiten Seitenrand 220 und in x-Richtung in Richtung des dritten Bereichs 210 strömt. Der zweite Winkel β kann identisch zu dem ersten Winkel α sein und/oder 30° bis 60° betragen.

Diese Ausgestaltung hat den Vorteil, den Randbereich des Fließbettes 65 besser zu fluidisieren und damit negative Randeffekte auf das Fluidisierungsverhalten des Feinerzes 55 und/oder Reaktionsproduktes 75 zu minimieren.

### Bezugszeichenliste

- 10: Fließbettreaktor
- 15: Reaktor
- 20: Verteilerboden
- 25: Verteilerraum
- 30: Reaktorraum
- 35: Einfüllöffnung
- 40: Entnahmeöffnung
- 45: Reaktionsgaszuführung
- 50: Reaktionsgasabführung
- 55: Feinerz
- 60: Reaktionsgas
- 65: Fließbett
- 70: Eisenpartikelträger
- 75: Reaktionsprodukt
- 80: verbrauchtes Reaktionsgas
- 85: erste Verteilerplatte
- 90: zweite Verteilerplatte
- 95: erste Anordnung
- 100: erste Durchgangsöffnung
- 105: erste Unterseite
- 110: erste Oberseite
- 115: Gerade
- 120: zweite Anordnung
- 125: Abdeckabschnitt
- 130: Anlageabschnitt
- 135: zweite Unterseite
- 140: zweite Oberseite
- 145: stoffschlüssige Verbindung
- 150: Schweißverbindung
- 155: erster Teilbereich
- 160: zweiter Teilbereich
- 165: Kammer
- 170: zweite Durchgangsöffnung
- 171: freies Ende
- 172: Schnittfläche
- 175: Reihe
- 180: erste Schweißnaht
- 185: zweite Schweißnaht
- 190: Raute
- 200: erster Bereich
- 205: zweiter Bereich
- 210: dritter Bereich
- 215: erster Seitenrand
- 220: zweiter Seitenrand
- 230: Schicht
- 235: erster Randbereich
- 240: zweiter Randbereich

## Patentansprüche

1. Fließbettreaktor (10) zur Behandlung von oxidischem Feinerz (55), insbesondere Eisenerz,
- wobei der Fließbettreaktor (10) einen Verteilerboden (20), einen Verteilerraum (25) und einen Reaktor (15) mit einem Reaktorraum (30) aufweist,
- wobei der Verteilerboden (20) den Reaktorraum (30) räumlich vom Verteilerraum (25) abtrennt,
- wobei der Verteilerboden (20) eine erste Verteilerplatte (85) und eine auf der ersten Verteilerplatte (85) angeordnete zweite Verteilerplatte (90) aufweist,
- wobei die erste Verteilerplatte (85) auf einer zum Verteilerraum (25) zugewandten Seite und die zweite Verteilerplatte (90) auf einer dem Reaktorraum (30) zugewandten Seite angeordnet sind,
- wobei die erste Verteilerplatte (85) eine erste Anordnung (95) aus sich vom Verteilerraum (25) in einer ersten Richtung (z) zum Reaktorraum (30) erstreckenden ersten Durchgangsöffnungen (100) aufweist,
- wobei die zweite Verteilerplatte (90) einen plattenförmig ausgebildeten Anlageabschnitt (130) und eine zweite Anordnung (120) aus Abdeckabschnitten (125) aufweist,
- wobei der Anlageabschnitt (130) beabstandet zu der ersten Anordnung (95) der ersten Durchgangsöffnungen (100) an der ersten Verteilerplatte (85) anliegt,
- wobei jeweils ein Abdeckabschnitt (125) der zweiten Anordnung (120) beabstandet in der ersten Richtung (z) zu einer zugeordneten ersten Durchgangsöffnung (100) angeordnet ist und die zugeordnete erste Durchgangsöffnung (100) zum Reaktorraum (30) abdeckt,
- wobei die zweite Verteilerplatte (90) an jedem der Abdeckabschnitte (125) eine in einer zweiten Richtung (x, y) geneigt zu der Geraden (115) versetzt zu der ersten Durchgangsöffnung (100) angeordnete zweite Durchgangsöffnung (170) aufweist,
- wobei aus dem Verteilerraum (25) über die ersten Durchgangsöffnungen (100) und die zweiten Durchgangsöffnungen (170) ein Reaktionsgas (60) zur Behandlung des Feinerzes (55) und zur Ausbildung eines Fließbetts (65) aus Feinerz (55) und Reaktionsgas (60) in den Reaktorraum (30) einleitbar ist.

2. Fließbettreaktor (10) nach Anspruch 1,
- wobei die erste Verteilerplatte (85) und der Abdeckabschnitt (125) jeweils eine Kammer (165) begrenzen,
- wobei sich die Kammer (165) zwischen der ersten Durchgangsöffnung (100) und der zweiten Durchgangsöffnung (170) parallel zu der ersten Verteilerplatte (85) in der zweiten Richtung (x, y) erstreckt.

3. Fließbettreaktor (10) nach Anspruch 2,
- wobei die Kammer (165) eine Kammerquerschnittsfläche und die zweite Durchgangsöffnung (170) eine zweite Querschnittsfläche aufweist,
- wobei die Kammerquerschnittsfläche größer als die zweite Querschnittsfläche ist.

4. Fließbettreaktor (10) nach Anspruch 2 oder 3,
- wobei die Kammer (165) in der zweiten Richtung (x, y) zwischen der ersten Durchgangsöffnung (100) und der zweiten Durchgangsöffnung (170) eine Kammerlänge (1) aufweist,
- wobei die zweite Durchgangsöffnung (170) in der ersten Richtung (z) eine Öffnungshöhe (h) aufweist,
- wobei die Öffnungshöhe (h) der zweiten Durchgangsöffnung (170) geringer ist als die Kammerlänge (1) der Kammer (165),
- wobei vorzugsweise ein Verhältnis der Öffnungshöhe (h) zu der Kammerlänge (1) von 1 bis einschließlich 20 beträgt.

5. Fließbettreaktor (10) nach einem der vorhergehenden Ansprüche,
- wobei die erste Durchgangsöffnung (100) eine erste Querschnittsfläche und die zweite Durchgangsöffnung (170) eine zweite Querschnittsfläche aufweist,
- wobei die zweite Querschnittsfläche größer als die erste Querschnittsfläche ist.

6. Fließbettreaktor (10) nach einem der vorhergehenden Ansprüche,
- wobei der Verteilerboden (20) einen ersten Bereich (200) und wenigstens einen zweiten Bereich (205) aufweist,
- wobei in dem ersten Bereich (200) die zweiten Durchgangsöffnungen (170) der zweiten Anordnung (120) jeweils eine identische erste Ausrichtung aufweisen,
- wobei in dem zweiten Bereich (205) die zweiten Durchgangsöffnungen (170) der zweiten Anordnung (120) jeweils eine zur ersten Ausrichtung unterschiedliche zweite Ausrichtung aufweisen.

7. Fließbettreaktor (10) nach Anspruch 6,
- aufweisend eine in den Reaktorraum (30) mündende Einfüllöffnung (35) und eine in den Reaktorraum (30) mündende Entnahmeöffnung (40),
- wobei die Einfüllöffnung (35) gegenüberliegend zu der Entnahmeöffnung (40) angeordnet ist und über die Einfüllöffnung (35) das Feinerz (55) in den Reaktorraum (30) förderbar ist,
- wobei über die Entnahmeöffnung (40) ein Reaktionsprodukt (75) aus einer Reaktion des Feinerzes (55) mit dem Reaktionsgas (60) aus dem Reaktorraum (30) förderbar ist,
- wobei der erste Bereich (200) zwischen der Einfüllöffnung (35) und der Entnahmeöffnung (40) angeordnet ist,
- wobei im ersten Bereich (200) die zweite Durchgangsöffnung (170) jeweils auf einer der Entnahmeöffnung (40) zugewandten Seite des Abdeckabschnitts (125) angeordnet ist.

8. Fließbettreaktor (10) nach Anspruch 6 oder 7,
- wobei der zweite Bereich (205) zwischen der Einfüllöffnung (35) und dem ersten Bereich (200) angeordnet ist,
- wobei die zweite Durchgangsöffnung (170) im zweiten Bereich (205) auf einer der Einfüllöffnung (35) abgewandten Seite und auf einer einem Seitenrand (215, 220) des Verteilerbodens (20) zugewandten Seite derart angeordnet ist, dass das Feinerz (55) von der Einfüllöffnung (35) in Richtung des Seitenrands (215, 220) mittels des ausströmenden Reaktionsgases (60) verteilbar ist.

9. Fließbettreaktor (10) nach einem der Ansprüche 6 bis 8,
- wobei der Verteilerboden (20) einen dritten Bereich (210) aufweist,
- wobei der dritte Bereich (210) zwischen dem ersten Bereich (200) und der Entnahmeöffnung (40) angeordnet ist,
- wobei in dem dritten Bereich (210) die zweiten Durchgangsöffnungen (170) jeweils eine zur ersten Ausrichtung unterschiedliche dritte Ausrichtung aufweisen,
- wobei die zweite Durchgangsöffnung (170) im dritten Bereich (210) jeweils auf einer der Entnahmeöffnung (40) zugewandten Seite und auf einer einem Seitenrand (215, 220) des Verteilerbodens (20) abgewandten Seite des Abdeckabschnitts (125) derart angeordnet ist, dass das Feinerz (55) und/oder ein Reaktionsprodukt (75) aus einer Reaktion des Feinerzes (55) mit dem Reaktionsgas (60) mittels des ausströmenden Reaktionsgases (60) von dem Seitenrand (215, 220) in Richtung der Entnahmeöffnung (40) förderbar ist.

10. Fließbettreaktor (10) nach einem der Ansprüche 6 bis 9,
- wobei der Verteilerboden (20) wenigstens einen Randbereich (235, 240) aufweist,
- wobei der Randbereich (235, 240) zwischen dem ersten Bereich (200) und der Entnahmeöffnung (40) und seitlich angrenzend an einen Seitenrand (215, 220) des Verteilerbodens (20) angeordnet ist,
- wobei die zweite Durchgangsöffnung (170) im Randbereich (235, 240) jeweils auf einer der Entnahmeöffnung (40) zugewandten Seite und auf einer dem Seitenrand (215, 220) des Verteilerbodens (20) zugewandten Seite des Abdeckabschnitts (125) derart angeordnet ist, dass das Feinerz (55) und/oder ein Reaktionsprodukt (75) aus einer Reaktion des Feinerzes (55) mit dem Reaktionsgas (60) mittels des ausströmenden Reaktionsgases (60) in Richtung der Entnahmeöffnung (40) förderbar ist.

11. Fließbettreaktor (10) nach einem der vorhergehenden Ansprüche,
- wobei die zweite Durchgangsöffnung (170) schlitzförmig ausgebildet ist,
- wobei die zweite Durchgangsöffnung (170) in der ersten Richtung (z) im Wesentlichen eine konstante Öffnungshöhe (h) aufweist.

12. Fließbettreaktor (10) nach einem der vorhergehenden Ansprüche,
- wobei umfangsseitig bezogen auf die Gerade (115) jeweils um eine erste Durchgangsöffnung (100) die erste Verteilerplatte (85) und der Anlageabschnitt (130) abgedichtet sind,
- wobei vorzugsweise umfangsseitig um die erste Durchgangsöffnung (100) jeweils der Anlageabschnitt (130) stoffschlüssig mit der ersten Verteilerplatte (85) verbunden, vorzugsweise verschweißt, ist.

13. Fließbettreaktor (10) nach einem der vorhergehenden Ansprüche,
- wobei der Abdeckabschnitt (125) einen ersten Teilbereich (155) und einen zweiten Teilbereich (160) aufweist,
- wobei der erste Teilbereich (155) parallel zu der ersten Verteilerplatte (85) verlaufend angeordnet ist und die erste Durchgangsöffnung (100) überdeckt,
- wobei der erste Teilbereich (155) die erste Durchgangsöffnung (100) zumindest abschnittsweise überdeckt,
- wobei der zweite Teilbereich (160) schräg geneigt zu dem ersten Teilbereich (155) angeordnet ist und den ersten Teilbereich (155) mit dem Anlageabschnitt (130) verbindet.

14. Fließbettreaktor (10) nach einem der vorhergehenden Ansprüche,
- wobei die zweite Anordnung (120) aus Abdeckabschnitten (125) in die zweite Verteilerplatte (85) eingeprägt ist.

15. Verfahren zur Herstellung eines Fließbettreaktors (10) nach einem der vorhergehenden Ansprüche,
- wobei die erste Verteilerplatte (85) mit der ersten Anordnung (95) von ersten Durchgangsöffnungen (100) bereitgestellt wird,
- wobei in ein plattenförmiges Blechmaterial die zweite Anordnung (120) der Abdeckabschnitte (125) eingeprägt und die zweite Durchgangsöffnung (170) in das Blechmaterial geschnitten, vorzugsweise gestanzt, wird,
- wobei die zweite Verteilerplatte (90) derart an der ersten Verteilerplatte (85) angeordnet wird, dass jeweils die erste Durchgangsöffnung (100) durch einen zugeordneten Abdeckabschnitt (125) abgedeckt wird,
- wobei der Anlageabschnitt (130) mit der ersten Verteilerplatte (85) mechanisch verbunden wird.
